# EUROPEAN PATENT SPECIFICATION

(11) **EP 2 982 237 B1**
(45) Date of publication and mention of the grant of the patent: **11.01.2017**
(21) Application number: 14774887.5
(22) Date of filing: 24.03.2014
(51) Int. Cl.: A01G 7/00, F21S 2/00, F21V 9/14, G02B 5/30, A01G 7/04, F21K 99/00

(54) **CIRCULARLY POLARIZED ILLUMINATION DEVICE**
ZIRKULAR POLARISIERTE BELEUCHTUNGSVORRICHTUNG
DISPOSITIF D'ÉCLAIRAGE À POLARISATION CIRCULAIRE

(30) Priority: 25.03.2013 JP 2013061484
(43) Date of publication of application: 10.02.2016
(73) Proprietor: FUJIFILM Corporation, Tokyo 106-8620 (JP)
(72) Inventor: USAMI, Yoshihisa, Ashigarakami-gun Kanagawa 258-8577 (JP); ICHIHASHI, Mitsuyoshi, Ashigarakami-gun Kanagawa 258-8577 (JP)
(74) Representative: Hoffmann Eitle
(86) International application number: PCT/JP2014/057957
(87) International publication number: WO 2014/157022

(56) References cited:
- WO-A1-2012/144422
- JP-A- H1 164 791
- JP-A- 2005 005 217
- JP-A- 2012 223 163

## Description

### Technical Field

The present invention relates to an illumination device that radiates either one of right-circularly polarized light and left-circularly polarized light. The present invention particularly relates to an illumination device to be used for plant cultivation.

### Background Art

Many illumination systems that radiate polarized light have conventionally been examined in an image display device and the like. In these systems, linearly polarized light is taken out by passing backlight through an absorption-type polarization plate. However, with the absorption-type polarization plate absorbing linearly polarized light, only one half of the light can be obtained at a maximum theoretically. Therefore, such a technology has been examined that a reflective polarizing plate is used and light is radiated again by the change of the polarization direction of the reflected light (for example, Patent Literature 1). However, by being reflected many times and passed through various films, the light is lost at large amount.

In contrast, as an illumination device that radiates, particularly, circularly polarized light with good energy efficiency, Patent Literature 2 discloses an illumination device having a reflective polarizing plate that allows one polarized light component to pass through and reflects the other polarized light component of entering light and a configuration of reusing a reflected polarized light component by changing the polarization state of the reflected polarized light component.

### Citation List

### Patent Literature

[Patent Literature 1] Japanese Patent Application Laid-Open No. 2005-108540
[Patent Literature 2] Japanese Patent Application Laid-Open No. 2012-223163
Further patent literature: WO 2012/144422 A1.

### Summary of Invention

### Problem to be Solved

An object of the present invention is to provide an illumination device that radiates either one of right-circularly polarized light and left-circularly polarized light, with good energy efficiency.

### Solutions to the Problems

The inventors of the present application have been faced with the problem during the course of studying an influence exerted on a plant by circularly polarized light. After hard examinations, the inventors have found that the problem can be achieved by an unconventional idea, and have completed the present invention on the basis of the findings. The present invention thus provides [1] to [6] below.

[1] An illumination device having the features of claim 1.
[2] The illumination device according to [1], wherein the light source has a structure in which LED lamps are disposed on both surfaces of a transparent plate.
[3] The illumination device according to any one of [1] to [2], including a first circularly polarized light reflection plate, a first λ/4 wavelength plate, a light source, a second λ/4 wavelength plate, and a second circularly polarized light reflection plate in this order.
[4] The illumination device according to any one of [1] to [2], including a first λ/4 wavelength plate, a first linearly polarized light reflection plate, a light source, a second linearly polarized light reflection plate, and a second λ/4 wavelength plate in this order.
[5] The illumination device according to any one of [1] to [2], including a first circularly polarized light reflection plate, a first λ/2 wavelength plate, a light source, and a second circularly polarized light reflection plate in this order.
[6] The use according to claim 8.

### Effect of the Invention

According to the present invention, an illumination device that radiates either one of right-circularly polarized light and left-circularly polarized light with good energy efficiency is provided.

### Brief Description of Drawings

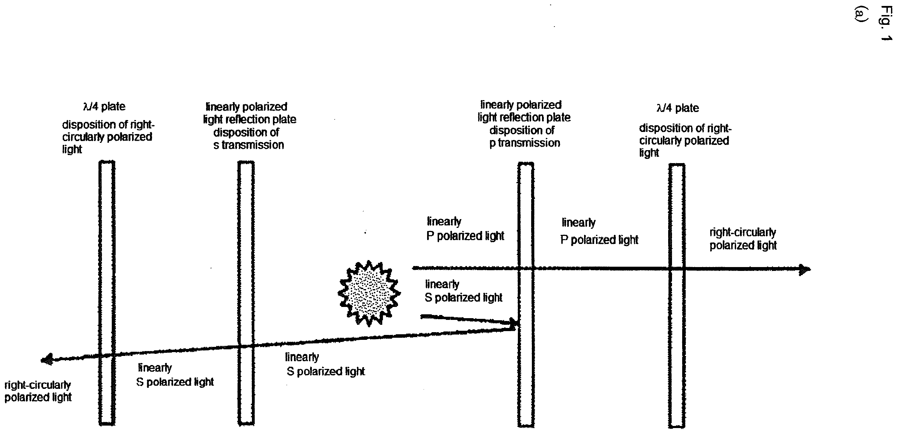

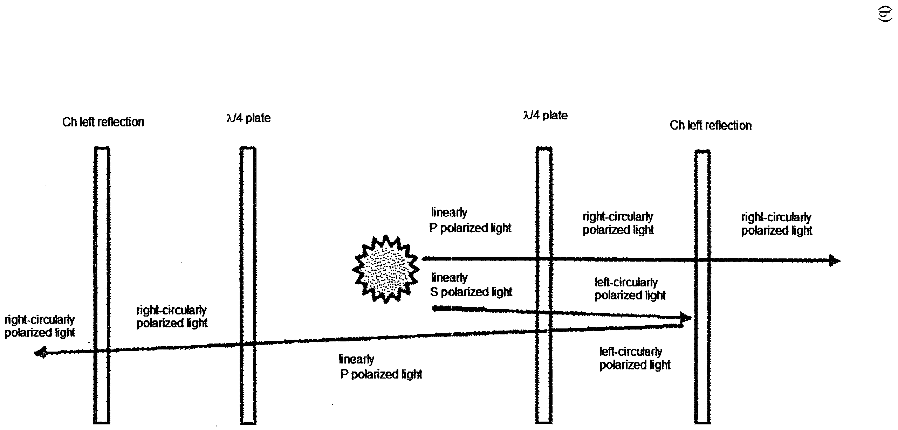

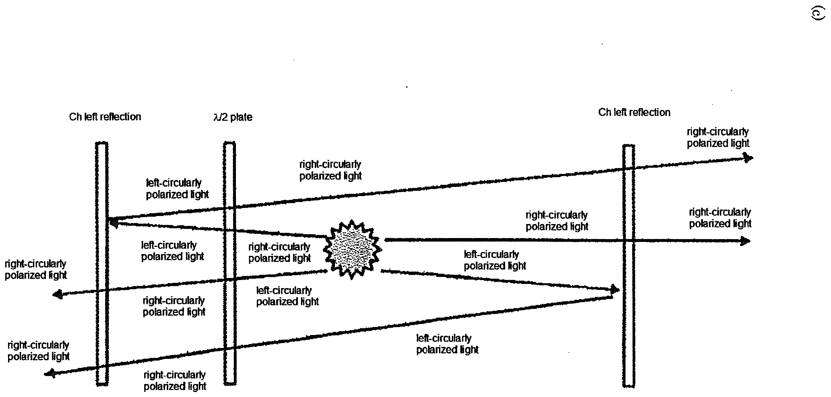

Fig. 1 is a drawing showing examples of fundamental configurations of the illumination device of the present invention.

### Modes of Carrying Out Invention

Hereinafter, the present invention will be explained in detail. Note that, "-" in the present description is used in the sense that numerical values described before and after thereof are included as the lower limit and the upper limit.

The illumination device of the present invention is an illumination device that selectively radiates either right-circularly polarized light or left-circularly polarized light.

A polarization state of light can be represented by the sum of right-circularly polarized light and left-circularly polarized light. For example, when intensities (light doses) of right- and left-circularly polarized components are equal to each other, the sum thereof results in linearly polarized light, and the electric vector thereof vibrates in the orientation determined by the phase difference between the left-circularly polarized light and right-circularly polarized light. When intensities of a right-circularly polarized component and a left-circularly polarized component are different from each other results in elliptically polarized light, and when either component only exists results in complete circularly polarized light.

"To radiate selectively either one of right-circularly polarized light and left-circularly polarized light" means that, in light, either right-circularly polarized light component or left-circularly polarized light component has a light dose larger than a light dose of the other component. Specifically, the light dose of either right-circularly polarized light component or left-circularly polarized light component may be 1.5 times or more, 2 times or more, 3 times or more, 4 times or more, 5 times or more or 10 times or more the other component, or either one of polarized light components may be substantially 100%.

The wavelength region of light radiated by the illumination device of the present invention is not particularly limited, but a wavelength region that will be necessary in accordance with an application of the illumination device can be selected and used. The wavelength region may be, for example, in an ultraviolet region (such as 10 nm to 420 nm), in a visible light region (such as 420 nm to 700 nm), in an infrared region (such as 700 nm to 1200 nm), or in a region that strides two or three regions thereof. Practically, the wavelength region may be determined according to a wavelength of light radiated from a light source to be used in the illumination device, and wavelength region that is controlled by a polarization plate and a retardation plate, to be used.

The polarization state at respective wavelengths of light radiated from the illumination device can be measured using a spectral radiance meter or a spectrometer mounted with a circularly-polarizing plate. In this case, the intensity of light measured through a right-circularly-polarizing plate corresponds to I_{R}, and the intensity of light measured through a left-circularly-polarizing plate corresponds to I_{L}. Furthermore, ordinary light sources such as an incandescent light bulb, a mercury lamp, a fluorescent lamp and an LED emit approximately natural light, and characteristics of producing polarized light of the polarization-state control member when being mounted on these can be measured using, for example, a polarized light phase difference-analyzing apparatus "AxoScan" manufactured by Axometrics, Inc., and the like.

Moreover, the characteristics can also be measured by attaching a circular polarization plate to an illuminance meter or a light spectrum meter. By measuring the dose of right-circularly polarized light while attaching a right-circularly polarized light-transmitting plate and measuring the dose of left-circularly polarized light while attaching a left-circularly polarized light transmitting plate, the ratio thereof can be measured.

### (Configuration of illumination device)

The illumination device of the present invention includes a first reflective polarizing plate, a light source, and a second reflective polarizing plate in this order. Furthermore, the illumination device of the present invention further includes one, or two or more retardation plates, in addition to the above. Each of the first reflective polarizing plate, the second reflective polarizing plate and the retardation plate is, typically, in a planar shape, and these may be disposed approximately in parallel. The first reflective polarizing plate and the second reflective polarizing plate may be, respectively, formed into a laminated body with a retardation plate, or may be in contact with the retardation plate.

When a planar light source is used, the light source is also disposed approximately in parallel with the first reflective polarizing plate, the second reflective polarizing plate, and the retardation plate. An irradiated area can be made large by adopting the structure. The first planar reflective polarizing plate and the second planar reflective polarizing plate may not necessarily be disposed approximately in parallel, but may form an angle of 45 degrees or less, 30 degrees or less, 15 degrees or less, 5
degrees or less, or 1 degree or less. Note that, in the case of being disposed in parallel, these plates form an angle of 0 degree. The same also applies to angles formed by the planar retardation plate, and the first reflective polarizing plate or the second reflective polarizing plate. The reflective polarizing plate may be a curved plate, and in the case, the retardation plate may be disposed such that a polarization state of reflected light is to be reversed when the reflective polarizing plate is irradiated after the reflection.

The first reflective polarizing plate, the light source, and the second reflective polarizing plate may be disposed such that light radiated from the light source and polarized by reflection by the first reflective polarizing plate passes through the second reflective polarizing plate, and that the light radiated from the light source and polarized by reflection by the second reflective polarizing plate passes through the first reflective polarizing plate. The ratio of light that is reflected by one polarization plate and then passes through other polarization plate is preferably large from the viewpoint of energy efficiency, and may be approximately 40% or more, 50% or more, 60% or more, 70% or more, 80% or more, or 90% or more.

The phase difference and disposition of the retardation plate may be adjusted such that, in both directions of the first reflective polarizing plate and the second reflective polarizing plate on the basis of the light source, either one of right-circularly polarized light and left-circularly polarized light, identical in both directions, is radiated. Specifically, in response to the first reflective polarizing plate and the second reflective polarizing plate to be used, the number of retardation plates, the position relative to the first reflective polarizing plate and the second reflective polarizing plate, the magnitude of retardation (retardation value), the direction of a slow axis relative to the transmission axis of the first reflective polarizing plate and the second reflective polarizing plate, and the like are adjusted. These adjustments can appropriately be performed by a person skilled in the art, and can be performed, for example, by referring to the description in "Optical engineering 1" (1st edition, published by MORIKITA PUBLISHING Co., Ltd.).

### (Light source)

The light source of the illumination device of the present invention is not particularly limited. Examples thereof include an LED; discharge lamps such as a fluorescent lamp, a xenon lamp, a mercury lamp, a sodium lamp, and a metal halide lamp; lamps using a filament such as a halogen lamp and an incandescent lamp; an inorganic/organic EL lamp; an electrodeless lamp, and the like. From the viewpoint of efficiency, an LED, a discharge lamp, an electrodeless lamp and an organic EL lamp are preferable, and an LED, a discharge lamp and an organic EL lamp, whose efficiency of light of wavelengths in a range of 300 - 800 nm which is effective for photosynthesis is high, is particularly preferable. An LED having the highest electricity-light efficiency is most preferable.

Light of a wavelength obtained by light emission may be used as it is, or light converted by a fluorescent material may be used.

The light source of the illumination device of the present invention is, usually, a light source that preferably radiates light toward both sides so as to be capable of radiating light toward both of the first reflective polarizing plate side and the second reflective polarizing plate side. Alternatively, the light source may be a light source that radiates light toward all directions of 360 degrees.

Furthermore, between the first reflective polarizing plate and the second reflective polarizing plate disposed on both sides of the light source, the light source preferably has a configuration that allows a polarized light component, which has been reflected by one of the plates and which is derived from light from the light source, to reach and pass through the other. Examples of the light sources include a light source of a structure in which point light sources such as LED lamps are disposed on both faces of a transparent plate. Namely, examples of the light sources include a light source produced by disposing, through the utilization of a transparent plate, a plurality of light sources radiating light toward one side on each face of the transparent plate. The point light source may be disposed on the transparent plate so that radiation directions of light are two directions parallel to the normal line of the transparent plate.

### (Reflective polarizing plate)

The reflective polarizing plate may be a polarization plate, for example, that allows either linear P polarized light or linear S polarized light to be reflected and the other to pass through, or that allows either right-circularly polarized light or left-circularly polarized light to be reflected and the other to pass through. The first reflective polarizing plate and the second reflective polarizing plate may be the same with or different from each other. However, in order to set the polarization properties of lights radiated from both sides to be the same, they are preferably the same. In the present description, the reflective polarizing plate is meant to include a linearly polarized light reflection plate and a circularly polarized light reflection plate. Note that a combination of a retardation plate and a linearly polarized light reflection plate could function as a circularly polarized light reflection plate, but in the present description, usually, a circularly polarized light reflection plate does not include one consisting of a combination of a retardation plate and a linearly polarized light reflection plate.

### (Circularly polarized light reflection plate)

The circularly polarized light reflection plate may be a polarization plate having a property of reflecting either component of right-circularly polarized light or left-circularly polarized light and of allowing the other to pass through. Examples of circularly polarized light reflection plates include those having a cholesteric liquid crystalline structure, and, for example, the description regarding a circularly polarized light reflection plate having a cholesteric liquid crystalline structure in Japanese Patent Application Laid-Open No. 2012-226229 (International Publication 2012-44422) can be referred to.

### (Linearly polarized light reflection plate)

Examples of the linearly polarized light reflection plates include (i) a linearly polarized light reflection plate of a multilayer structure, (ii) a polarizer obtained by laminating thin films having different birefringent properties, (iii) a wire grid type polarizer, (iv) a polarization prism, (v) an anisotropic scattering type polarizing plate, and the like.

Regarding each of these, specifically, for example, descriptions on reflective polarizing plates in Japanese Patent Application Laid-Open No. 2012-223163 can be referred to.

### (Retardation plate)

As a retardation plate, one having an appropriate phase difference may be used according to the type and disposition site of a polarization plate to be used. Specific examples thereof include a λ/4 wavelength plate, a λ/2 wavelength plate, and the like. Note that a λ/4 wavelength plate in the present description may be a (2n + 1/4)λ plate (n is an integer). Furthermore, a λ/2 wavelength plate may be a (2n + 1/2)λ plate (n is an integer). n is preferably 0.

The retardation plate is not particularly limited and can be appropriately selected in accordance with the purpose, and the examples include a stretched polycarbonate film, a stretched norbornene-based polymer film, a transparent film oriented by containing an inorganic particle having birefringence such as strontium carbonate, a thin film obtained by obliquely vapor-depositing an inorganic dielectric substance on a support, and the like.

Examples of the retardation plates include (1) a retardation plate obtained by laminating a birefringent film having large retardation and a birefringent film having small retardation such that optical axes thereof are orthogonal with each other, as described in Japanese Patent Application Laid-Open Nos. 5-27118 or 5-27119, (2) a retardation plate that gives a λ/4 wavelength in a wide wavelength region by laminating a polymer film configured to give the λ/4 wavelength at a specific wavelength and a polymer film that is composed of the same material and is configured to give a λ/2 wavelength at the same wavelength, as described in Japanese Patent Application Laid-Open No. 10-68816, (3) a retardation plate capable of achieving a λ/4 wavelength in a wide wavelength region by laminating two polymer films, as described in Japanese Patent Application Laid-Open No. 10-90521, (4) a retardation plate capable of achieving a λ/4 wavelength in a wide wavelength region using a modified polycarbonate film as described in International Publication No. 00/26705 pamphlet, (5) a retardation plate capable of achieving a λ/4 wavelength in a wide wavelength region using a cellulose acetate film as described in International Publication No. 00/65384 pamphlet, and the like.

A commercially available product may be used as the retardation plate. Examples of the commercially available product of a λ/4 wavelength plate include trade name "Pureace WR" (manufactured by Teijin Limited), and the like.

### (Other members)

The illumination device of the present invention may further have, as necessary, other members such as a reflection member, a heat release member, an infrared ray absorption member, an ultraviolet ray absorption member, a lens and a prism.

### (Specific examples)

Examples of fundamental configurations of the illumination device of the present invention are shown in Figs. 1(a) to 1(c). Note that, since Figs. 1(a) and 1(c) are drawings symmetrically disposed left and right with a light source as the center, only a light path of light radiated toward one side from the light source is shown.

Fig. 1(a) is a drawing showing an example in which a second λ/4 retardation plate, a second reflective polarizing plate, a light source, a first reflective polarizing plate, a first λ/4 retardation plate are disposed in this order. Fig. 1(a) is shown as an example of an illumination device that radiates right-circularly polarized light. The first polarization plate on the right-hand side of the light source is disposed such that light of the vertical direction passes through, and the second polarization plate on the left-hand side of the light source is disposed so that light of the lateral direction passes through. A λ/4 plate is set on the outside of the first polarization plate on the right-hand side of the light source such that the transmitted light is right-circularly polarized light, and a λ/4 plate is set also on the outside of the second polarization plate on the left-hand side of the light source such that the transmitted light is right-circularly polarized light. Light radiated from the light source toward the right-hand side passes through the first polarization plate and a first λ/4 plate, and is radiated toward the right-hand side as right-circularly polarized light. In the first polarization plate, light polarized in the horizontal direction is reflected and the light passes through the second polarization plate and a second λ/4 plate, and is radiated toward the left-hand side as right-circularly polarized light. The light radiated from the light source toward the left-hand side passes through the second polarization plate and the second λ/4 plate, and is radiated toward the left-hand side as right-circularly polarized light, and in the second polarization plate, light polarized in the vertical direction is reflected and the light passes through the first polarization plate and the first λ/4 plate, and is radiated toward the right-hand side as right-circularly polarized light. Light obliquely radiated from the light source does not enter the λ/4 plate vertcally, and thus is radiated as elliptically-polarized light, but has a high probability of being radiated as light having mainly right-circularly polarized light components.

Fig. 1(b) is a drawing showing an example of disposing the second circularly polarized light reflection plate, the second λ/4 retardation plate, a light source, the first λ/4 retardation plate and a first circularly polarized light reflection plate in this order. Namely, the light source is disposed while being sandwiched by λ/4 plates, and, on both outsides of these, a right-circularly polarized light transmission/ left-circularly polarized light reflection plate is disposed. Fig. 1(b) is shown as an example of an illumination device radiating right-circularly polarized light. A polarized light component in the vertical direction, which is radiated from the light source toward the right-hand side, passes through first the λ/4 plate to thereby give right-circularly polarized light. (It is assumed that the direction of the slow axis of the first λ/4 plate has been adjusted so as to give the above result.) The right-circularly polarized light passes through the first right-circularly polarized light transmission plate and is radiated toward the outside as right-circularly polarized light. Light polarized in the lateral direction radiated from the light source toward the right-hand side passes through the first λ/4 plate to give left-circularly polarized light. The left-circularly polarized light is reflected by the first right-circularly polarized light transmission plate and enters again the first λ/4 plate. After passing through the first λ/4 plate, the light becomes light polarized in the vertical direction. After further having entered the second λ/4 plate, then, the light becomes right-circularly polarized light. The right-circularly polarized light passes through the second right-circularly polarized light transmission plate and is radiated toward the outside.

Fig. 1(c) is a drawing showing an example of disposing the second circularly polarized light reflection plate, a λ/2 retardation plate, a light source, and the first circularly polarized light reflection plate in this order. Fig. 1(c) is shown as an example of an illumination device that radiates right-circularly polarized light.

The right-circularly polarized light radiated from the light source toward the right-hand side passes through the first right-circularly polarizing plate. Left-circularly polarized light radiated from the light source toward the right-hand side is reflected by the first right-circularly polarizing plate, and by passing through the λ/2 plate, the left-circularly polarized light becomes right-circularly polarized light, which is radiated toward the outside via the second right-circularly polarizing plate. Left-circularly polarized light radiated from the light source toward the left-hand side also becomes right-circularly polarized light via the λ/2 plate in the same manner, which is radiated toward the outside via the second right-circularly polarizing plate. Right-circularly polarized light radiated from the light source toward the left-hand side becomes left-circularly polarized light via the λ/2 plate, which is reflected by the second right-circularly polarizing plate, enters again the λ/2 plate to give right-circularly polarized light, and passes through the right-circularly polarized light transmission plate on the right-hand side to go out.

### (Use applications)

Use applications of the illumination device of the present invention are not particularly limited. Examples thereof include an illumination device for irradiating a chiral material to thereby induce a reaction specific to circularly polarized light. Furthermore, examples include particularly the use as illumination for plant cultivation. It is known that a certain influence is sometimes exerted on a growth of the plant or the like by whether light with which a plant is irradiated includes dominantly right-circularly polarized light or includes dominantly left-circularly polarized light (Japanese Patent Application Laid-Open No. 2008-228688, International Publication No. 2012-44422, or the like).

The growth of plant can be remarkably accelerated by using the illumination device of the present invention as illumination for plant cultivation. Furthermore, a specific component of plant such as a fragrance component can be enhanced.

The illumination device of the present invention can radiate specific circularly polarized light from both sides of the device, and thus, for example, it is possible to dispose the illumination device of the present invention at the center of a house for plant cultivation and to cultivate the plant on both sides of the device in light radiation directions.

## Claims

1. An illumination device which selectively radiates either one of right-circularly polarized light and left-circularly polarized light, comprising a first reflective polarizing plate, a light source, and a second reflective polarizing plate in this order, and further comprising a retardation plate, wherein the first reflective polarizing plate, the light source, and the second reflective polarizing plate are disposed such that polarized light reflected by the first reflective polarizing plate passes through the second reflective polarizing plate and polarized light reflected by the second reflective polarizing plate passes through the first reflective polarizing plate, and phase difference and disposition of the retardation plate are adjusted such that the either one of the circularly polarized lights is radiated toward both of a direction of the first reflective polarizing plate and a direction of the second reflective polarizing plate based on the light source.

2. The illumination device according to claim 1, wherein the light source has a structure in which LED lamps are disposed on both surfaces of a transparent plate.

3. The illumination device according to any one of claims 1 to 2, comprising a first circularly polarized light reflection plate, a first λ/4 wavelength plate, a light source, a second λ/4 wavelength plate, and a second circularly polarized light reflection plate in this order.

4. The illumination device according to any one of claims 1 to 2, comprising a first λ/4 wavelength plate, a first linearly polarized light reflection plate, a light source, a second linearly polarized light reflection plate, and a second λ/4 wavelength plate in this order.

5. The illumination device according to any one of claims 1 to 2, comprising a first circularly polarized light reflection plate, a first λ/2 wavelength plate, a light source, and a second circularly polarized light reflection plate in this order.

6. The illumination device according to any one of claims 1 to 5, which selectively radiates right-circularly polarized light.

7. The illumination device according to any one of claims 1 to 5, which selectively radiates left-circularly polarized light.

8. Use of the illumination device according to one of claims 1 to 7 for plant cultivation.

## Patentansprüche

1. Beleuchtungseinrichtung, die selektiv eines aus rechtsdrehend zirkular polarisiertem Licht und linksdrehend zirkular polarisiertem Licht ausstrahlt, mit einer ersten reflektierenden Polarisierungsplatte, einer Lichtquelle und einer zweiten reflektierenden Polarisierungsplatte in dieser Reihenfolge, und ferner mit einer Retardierungsplatte, wobei die erste reflektierende Polarisierungsplatte, die Lichtquelle und die zweite reflektierende Polarisierungsplatte so vorgesehen sind, dass polarisiertes Licht, das durch die erste reflektierende Polarisierungsplatte reflektiert wurde, durch die zweite reflektierende Polarisierungsplatte hindurchtritt, und dass polarisiertes Licht, das durch die zweite reflektierende Polarisierungsplatte reflektiert wurde, durch die erste reflektierende Polarisierungsplatte hindurchtritt, und die Phasendifferenz und die Anordnung der Retardierungsplatte so eingestellt sind, dass ein jedes der zirkular polarisierten Lichter sowohl zu einer Richtung der ersten reflektierenden Polarisierungsplatte und einer Richtung der zweiten reflektierenden Polarisierungsplatte basierend auf der Lichtquelle ausgestrahlt wird.

2. Beleuchtungseinrichtung nach Anspruch 1, wobei die Lichtquelle eine Struktur hat, in der LED-Lampen an beiden Oberflächen einer transparenten Platte vorgesehen sind.

3. Beleuchtungseinrichtung nach einem der Ansprüche 1 bis 2, mit einer ersten Reflektionsplatte für zirkular polarisiertes Licht, einer ersten A/4-Wellenlängenplatte, einer Lichtquelle, einer zweiten A/4-Wellenlängenplatte und einer zweiten Reflektionsplatte für zirkular polarisiertes Licht in dieser Reihenfolge.

4. Beleuchtungseinrichtung nach einem der Ansprüche 1 bis 2, mit einer ersten A/4-Wellenlängenplatte, einer ersten Reflektionsplatte für linear polarisiertes Licht, einer Lichtquelle, einer zweiten Reflektionsplatte für linear polarisiertes Licht und einer zweiten λ/4-Wellenlängenplatte in dieser Reihenfolge.

5. Beleuchtungseinrichtung nach einem der Ansprüche 1 bis 2, mit einer ersten Reflektionsplatte für zirkular polarisiertes Licht, einer ersten λ/2-Wellenlängenplatte, einer Lichtquelle und einer zweiten Reflektionsplatte für zirkular polarisiertes Licht in dieser Reihenfolge.

6. Beleuchtungseinrichtung nach einem der Ansprüche 1 bis 5, welche selektiv rechtsdrehend zirkular polarisiertes Licht ausstrahlt.

7. Beleuchtungseinrichtung nach einem der Ansprüche 1 bis 5, welche selektiv linksdrehend zirkular polarisiertes Licht ausstrahlt.

8. Verwendung der Beleuchtungseinrichtung nach einem der Ansprüche 1 bis 7 in der Pflanzenzucht.

## Revendications

1. Dispositif d'éclairage qui fait rayonner sélectivement l'une ou l'autre d'une lumières polarisées circulairement vers la droite et d'une lumières polarisée circulairement vers la gauche, comprenant une première plaque polarisante réfléchissante, une source de lumière, et une seconde plaque polarisante réfléchissante dans cet ordre, et comprenant en outre une plaque de retardement, dans lequel la première plaque polarisante réfléchissante, la source de lumière, et la seconde plaque polarisante réfléchissante sont disposées de telle sorte que de la lumière polarisée réfléchie par la première plaque polarisante réfléchissante passe à travers la seconde plaque polarisante réfléchissante et de la lumière polarisée réfléchie par la seconde plaque polarisante réfléchissante passe à travers la première plaque polarisante réfléchissante, et une différence de phase et une disposition de la plaque de retardement sont ajustées de telle sorte que l'une ou l'autre des lumières polarisées circulairement soit mise en rayonnement vers les deux d'une direction de la première plaque polarisante réfléchissante et d'une direction de la seconde plaque polarisante réfléchissante en fonction de la source de lumière.

2. Dispositif d'éclairage selon la revendication 1, dans lequel la source de lumière possède une structure dans laquelle des lampes à LED sont disposées sur les deux surfaces d'une plaque transparente.

3. Dispositif d'éclairage selon l'une quelconque des revendications 1 à 2, comprenant une première plaque de réflexion de lumière polarisée circulairement, une première plaque à longueur d'onde λ/4, une source de lumière, une seconde plaque à longueur d'onde λ/4, et une seconde plaque de réflexion de lumière polarisée circulairement dans cet ordre.

4. Dispositif d'éclairage selon l'une quelconque des revendications 1 à 2, comprenant une première plaque à longueur d'onde λ/4, une première plaque de réflexion de lumière polarisée linéairement, une source de lumière, une seconde plaque de réflexion de lumière polarisée linéairement, et une seconde plaque à longueur d'onde λ/4 dans cet ordre.

5. Dispositif d'éclairage selon l'une quelconque des revendications 1 à 2, comprenant une première plaque de réflexion de lumière polarisée circulairement, une première plaque à longueur d'onde λ/2, une source de lumière, et une seconde plaque de réflexion de lumière polarisée circulairement dans cet ordre.

6. Dispositif d'éclairage selon l'une quelconque des revendications 1 à 5, qui fait rayonner sélectivement de la lumière polarisée circulairement vers la droite.

7. Dispositif d'éclairage selon l'une quelconque des revendications 1 à 5, qui fait rayonner sélectivement de la lumière polarisée circulairement vers la gauche.

8. Utilisation du dispositif d'éclairage selon l'une quelconque des revendications 1 à 7 pour la culture de plantes.
